# EUROPEAN PATENT SPECIFICATION

(11) **EP 3 777 017 B1**
(45) Date of publication and mention of the grant of the patent: **27.09.2023**
(21) Application number: 18930101.3
(22) Date of filing: 17.08.2018
(51) Int. Cl.: G11C 5/14, G11C 14/00, G06F 21/79, G06F 21/57, H04L 9/14, G06F 9/4401, G11C 11/00, H04L 9/08

(54) **EPHEMERAL REGIONS WITHIN NON-VOLATILE MEMORY DEVICES**
EPHEMERE REGIONEN IN NICHTFLÜCHTIGEN SPEICHERVORRICHTUNGEN
RÉGIONS ÉPHÉMÈRES DANS DES DISPOSITIFS DE MÉMOIRE NON VOLATILE

(43) Date of publication of application: 17.02.2021
(73) Proprietor: HEWLETT-PACKARD DEVELOPMENT COMPANY, L.P., Spring, TX 77389 (US)
(72) Inventor: MEDAGLIA, Diego, 90619-900 Porto Alegre (BR); HAAS, Carlos, Palo Alto, CA 94304 (US); GAY, Raphael, Fort Collins, CO 80528 (US); ALCORN, Byron A., Fort Collins, CO 80528 (US); WARD, Shane, Fort Collins, CO 80528 (US)
(74) Representative: Jennings, Michael John
(86) International application number: PCT/US2018/046935
(87) International publication number: WO 2020/036602

(56) References cited:
- WO-A1-2018/057039
- US-A1- 2007 101 158
- US-A1- 2016 321 083
- US-A1- 2017 235 675
- US-B2- 8 516 271
- US-B2- 8 516 271
- US-B2- 8 712 044

## Description

### BACKGROUND

Data storage devices (also called memory devices) may be grouped into two categories: volatile and non-volatile. Non-volatile data storage device may include any data storage device that can retrieve data stored thereon even after being subjected to a power cycle. Volatile data storage devices, in contrast, may include any data storage device that retains data stored thereon so long as power is maintained. When power is lost or interrupted in a volatile memory device, the data stored thereon is lost.

US 2007/101158 A1 describes a controller, in a security system, adapted to access data in a non-volatile storage and create an effectively volatile region in the non-volatile storage.

US 8 516 271 B2 describes methods, apparatus and articles of manufacture to secure non-volatile memory regions. An example method described therein comprises associating a first key pair and a second key pair different than the first key pair with a process, using the first key pair to secure a first region of a non-volatile memory for the process, and using the second key pair to secure a second region of the non-volatile memory for the same process, the second region being different than the first region.

US 2016/321083 A1 describes a computer having a processor and a byte-addressable non-volatile read-write main memory. The memory is partitioned into plural regions, each region having at least one defined operational property. At least one of the regions is a metadata region to store plural data sets. Each data set specifies a location in memory, and the at least one operational property, of a corresponding one of the regions.

WO 2018/057039 A1 describes examples relating to updating memory management information to boot an electronic device from a reduced power mode. In one implementation, prior to entering a reduced power mode, an electronic device creates a snapshot of instructions in a logically volatile partition of a partitioned persistent memory and manage the snapshot as a logically persistent partition. Prior to entering a resume mode, the electronic device updates memory management information to remap a portion of the partitioned memory resource including the snapshot to be managed as a logically volatile partition. the electronic device may resume execution from the snapshot.

### SUMMARY OF THE INVENTION

The invention is set out in the claims.

### BRIEF DESCRIPTION OF THE DRAWINGS

The accompanying drawings illustrate various examples of the principles described herein and are part of the specification. The illustrated examples are given merely for illustration, and do not limit the scope of the claims.
Fig. 1 is a block diagram of a computing device according to an example of the principles described herein.
Fig. 2 is a flowchart depicting a method of unlocking a data storage device of a computing device according to an example of the principles described herein.
Fig. 3 is a block diagram of a non-volatile data storage device (300) according to an example of the principles described herein.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### DETAILED DESCRIPTION

In order to prepare memory devices for hibernation in computing systems, data defining volatile system memory maintained on a volatile memory device is copied to a persistent memory device such as a non-volatile memory device so that the system memory may be reused when the computing device is subsequently powered-up. Some examples of these power-down processes may include Hybrid-sleep (S3) or Hibernate (S4) in Windows/Linux computer platforms. When the computing system and its associated memory devices are powered up again, the data defining volatile system memory is copied, again, from persistent memory devices (i.e., hard drives or SSDs) back to the volatile memory device. Copying data defining volatile system memory from the volatile memory devices and then back onto the volatile memory devices takes time. Indeed, a vast majority of the power-up process includes the copying of the data defining volatile system memory to the volatile memory again.

In some examples, if the memory device stores persistent data (i.e., data that is to be reused across reboots or power-down operations), a passphrase may be set and saved in the non-volatile memory (NVM) device so that during each boot, power cycle, or suspended state, the passphrase previously set will be used to resume operation. Indeed, in an example, a non-volatile memory device may include an ephemeral region. As used in the present specification and in the appended claims, the term "ephemeral region" is meant to be understood as a region that behaves, during power loss to the non-volatile region, as though it was volatile. Data stored in an ephemeral region of the NVM is retrievable using only the decryption key included in the process's ephemeral region key pair. However, in some examples, data stored in a persistent region of the NVM is retrievable using either the decryption key included in the process's persistent region key pair, or another (e.g., different) decryption key maintained by, for example, a recovery service. Furthermore, in some examples, the key pairs associated with a process are stored in volatile memory and, thus, become lost after, for example, a power loss or a system crash. This may prevent recovery of data stored in an ephemeral region of NVM, whereas data stored in a persistent region, but not an ephemeral region, of the NVM can still be recovered using, for example, the decryption key maintained by the recovery service.

If the computing system initiates a suspended state, NVM devices will behave like dynamic random-access memory (DRAM) devices. That is, they'll keep data as long as they're powered. In this example, the computing system will keep NVM devices powered so as to be able to reuse its data. As a result, the key is not lost.

The present specification describes a computing system that eliminates the use of NVM that is to be flushed prior to a power down state. Instead, the process includes, in an example, a modified S3 (commonly referred to as Standby, Sleep, or Suspend to RAM (STR)) that reduces the power provided to the NVM devices to zero while still powering other memory devices such as DRAM and system-on-chip (SoC). In another example, the present specification describes a computing system that performs a modified S3 or S4(referred to as hibernation state) which saves power and allows the computing device to resume operations even when power has been completely turned off. This process also avoids copying system random-access memory (RAM) from storage to NVM devices thereby drastically improving suspend and resume times and eliminating extra data storage. These processes described herein may also be implemented in mobile devices such as smartphones that implement sleep states S1-S3 but never implement a hybrid S3 or S4 state due to suspend/resume times and data storage space limitations.

The present specification describes a computing device that includes a non-volatile memory device comprising an ephemeral memory region therein, the ephemeral memory region being encrypted and comprising an associated encryption key; and firmware to cause the encryption key to be stored prior to any power loss to the computing device.

The present specification also describes a method of unlocking data storage devices of a computing device that includes, with firmware of a computing device, collecting an encryption key associated with an ephemeral region of a non-volatile memory device prior to a power loss to the non-volatile memory device; and reinstating, via execution of the firmware, the encryption key to the non-volatile memory device when power is reinstated.

The present specification further describes a non-volatile data storage device that includes an ephemeral region; an encryption key used to encrypt the ephemeral region; and a delivery module to, prior to power loss at the ephemeral region, deliver the encryption key to firmware of a computing device.

As used in the present specification and in the appended claims, the term "non-volatile memory (NVM) device" is meant to be understood as any device that can retrieve stored information even after having been power cycled. Example, NVM devices includes read-only memory, flash memory, ferroelectric RAM, magnetic computer storage devices (e.g. hard disk drives, solid state drives, floppy disks, and magnetic tape), and optical discs, among others.

As used in the present specification and in the appended claims, the term "ephemeral memory partition" is meant to be understood as a subdivision of any type of computing device memory that retains its contents while powered on but when the power is interrupted, the stored data is lost. Example ephemeral memory devices may include dynamic random-access memory (DRAM), and static random-access memory (SRAM), among others. The present application however, describes an ephemeral memory partition that regains access to the stored data on the ephemeral memory partitions or regions after a reboot and previous power loss to the partition or region.

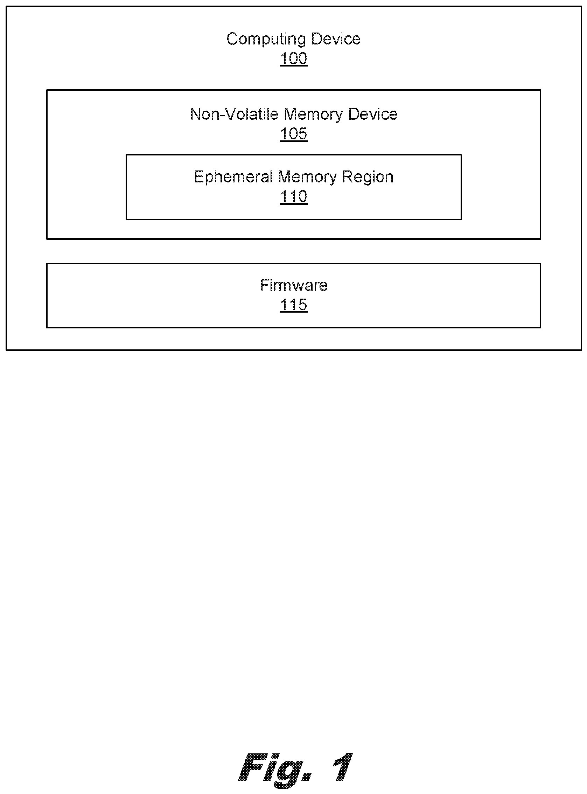

Turning now to the figures, Fig. 1 is a block diagram of a computing device (100) according to an example of the principles described herein. The computing device (100) may be any type of computing device including servers, desktop computers, laptop computers, personal digital assistants (PDAs), mobile devices, smartphones, gaming systems, and tablets, among other types of computing devices.

In an example, the computing device (100) may include a non-volatile memory device (105) having an ephemeral memory region (110). The non-volatile memory device (105) may be any type of memory device that, even when power is removed from the memory device, data maintained on the non-volatile memory device (105) is persistent and accessible once power is restored to the non-volatile memory device (105). In any example presented herein, the non-volatile memory device (105) may be partitioned to include an ephemeral memory region (110). The ephemeral memory region (110) of the non-volatile memory device (105) may be created by a processor of the computing device (100). The creation of the ephemeral memory region (110) by the processor may be accomplished by the processor creating a region where information written to and read from the region is encrypted and decrypted, respectively. In any example presented herein, the data maintained on the ephemeral memory region (110) of the non-volatile memory device (105) may include platform unified extensible firmware interface (UEFI) application data, operating system (OS) data, or any other type of data that may be maintained for relatively quick access by the processor.

In an example, the non-volatile memory device (105) may be self-encrypting. In this example, the non-volatile memory device (105) may include computer readable program code in the form of a random number generator that, upon execution, generates a unique encryption key (temp_key) to be associated with the ephemeral memory region (110). The encryption key may be used to access data from the ephemeral memory region (110) at any time during operation of the computing device (100).

The computing device (100) may include firmware (115). The firmware (115) may be used to control the hardware devices within the computing device (100). In an example, the firmware (115) is used to secure the encryption key associated with the ephemeral memory region (110) of the non-volatile memory device (105). Securing of the encryption key may include, in an example, directing the encryption key to be stored on the non-volatile memory device (105). In this example, the non-volatile memory device (105) may be self-encrypting such that, upon execution of the firmware, the encryption key is stored on the non-volatile memory device (105) as it is created. During operation of the computing device (100), therefore, executed computer-readable program code running in the firmware (115) may request from each non-volatile memory device (105) their respective encryption keys associated with each of their ephemeral memory regions (110). In an example, the firmware (115) itself may execute encryption software to create the encryption keys to be associated with each of the ephemeral memory regions (110) of the non-volatile memory devices (105). In any example, computer-readable program code may be executed by the firmware (115) that causes signals to be sent to the operating system of the computing device (100) informing the operating system regarding the status of collection of encryption keys: started, ongoing, completion, errors, etc. By informing the operating system of the status of collection of the encryption keys, the operating system may prevent a change in power state until the encryption keys are received. Additionally, by informing the operating system of the fact that the encryption keys are being collected, the OS may be prevented from flushing or copying data in the applicable ephemeral memory regions (110) during a power state change. As such, the processes associated with the OS during a power state change are reduced increasing the time and power consumed during such a power state change. Consequently, as pertaining to the ephemeral memory regions (110), the OS not only is prevented from flushing or copying the data from the ephemeral memory regions (110) to NVM devices but also is prevented from initiating data from the BIOS that is present in the ephemeral memory regions (110) data when transitioning back to an "on" power state (P0). During a rebooting process, the OS is also prevented from initiating that data that is otherwise maintained on the ephemeral memory regions (110) and instead uses the encryption keys to access the ephemeral memory regions (110) and reinitiate the state the computing device (100) was in prior to the power down state. Where errors are detected by the firmware (115), a notice may be presented to a user of the computing device (100) indicating that the encryption keys have not been collected and changes in power states will be temporarily disabled until the error is corrected.

In an example, securing of the encryption key may include securing the encryption key on any NVM device of the computing device (100). Examples of NVM devices of the computing device (100) may include a hardware trusted platform module (TPM), a software implementation of a TPM, and a storage device associated with the platform firmware itself, among others. In this example, the firmware (115) may be responsible for collecting each encryption key associated with any of the ephemeral memory regions (110) of any number of non-volatile memory devices (105) of the computing device (100).

In any example presented herein, the secure storage of the encryption key is completed before any power state change. Power state changes may include any powering down of any device within the computing device (100). Different power states may include any sleep state (S1-S3) and hibernation (S4). Depending on the level of sleep state (S1-S3) power may or may not be maintained on the central processing unit (CPU) of the computing device (100) with some system caches losing power. Hibernation (S4), however, powers the computing device (100) down and, without the firmware (115) directing the encryption keys associated with the ephemeral memory regions (110) of the non-volatile memory devices (105), data will be lost otherwise.

During operation and as the computing device (100) changes from a powered to low power (S1-S3) or powerless (S4) state, the firmware (115) may inform the OS that the memory devices are to be coordinated or the platform itself may signal to a system on a chip (SoC) integrated circuit that memory and peripherals are being relegated to a new power state. Separate volatile storage that is going to lose power due to a power state change, such as caches associated with the CPU and memory controller buffers among others may be flushed to NVM, including, in some examples, DRAM caching of NVM devices. Although some SoCs have different processes for the myriad number of power states they support, the deeper the power state (less energy consumption), the more volatile areas of the SoC are to be flushed to NVM devices. In the case of power loss, the flush should be as complete as possible.

In an example, any DRAM present within the computing device (100) may or may not flush its data to a non-volatile memory device (105). The DRAM instead will flush its data to the non-volatile memory device (105) based on which power state the computing device (100) is changing to. In an example, the DRAM does not flush its data to the non-volatile memory device (105) when the computing device (100) is moving into a sleep state (S1-S3). However, the DRAM does flush its data to the non-volatile memory device (105) before the computing device (100) transitions into a hibernation state, a shutdown state, or a power loss to the computing device (100). After all flushes are completed, the computing device (100) may change its power state accordingly.

During operation of the computing device (100) and powering on of the machine again, program code executed by the firmware (115) and as part of the boot process may reinstate the encryption keys to each non-volatile memory device (105). This enables data within the ephemeral memory regions (110) of the non-volatile memory device (105) to be read again. In any example, the encryption key is used to decrypt the data maintained on the ephemeral memory region (110) and otherwise rendered inaccessible without the encryption key. In an example, the provisioning of the encryption key may be done automatically by the firmware (115). In an example, a user's log-in password may be used as a secure signal to the firmware (115) to provide the encryption keys to the non-volatile memory devices (105). In an example, a password distinct from a user's log-on password may be provided so as to cause the firmware (115) to provide the encryption keys to the non-volatile memory device (105). In any of these examples, a user may set, via the BIOS, how and under what conditions (distinct passwords, user's log-in password, automatically) the encryption key is provided to the non-volatile memory device (105) by the firmware (115). By allowing a user to determine when and under what conditions the encryption key is provided to the non-volatile memory device (105) (if at all) provides for a computing device (100) that allows a user to determine whether any additional security is to be executed on the computing device (100). Indeed, by having a password request prior to the provisioning of the encryption keys, a user may secure data within the ephemeral memory region (110) that otherwise may have been accessible to other unauthorized operators of the computing device (100).

In the examples where power is lost to the computing device (100) due to power failures or accidental powering off (i.e., S5 state or power off state), data maintained on the ephemeral memory regions (110) and accessible via use of the encryption keys may be used to completely or partially restore a previous system state. In this example, UEFI applications and/or the operating system boot loader of the computing device (100) may functionally scrub the ephemeral memory regions (110) of the non-volatile memory devices (105) and extract system, application, and/or operating system data. This may allow for some data recovery upon such an unexpected power loss to the computing device (100). However, as described herein, because the key pairs associated with the data on the ephemeral memory regions (110) are sent to safe storage upon creation of the key pairs, any power loss may result in complete or even partial memory recovery on the ephemeral memory regions (110). In an example, the BIOS may be configured to look for the key pairs upon reboot and use those keys to access the ephemeral memory regions (110).

Based on the description of the computing device (100) presented herein, a number of new power states with corresponding suspend and resume processes may be developed. By way of example, in computing devices (100) that include a non-volatile memory device (105) with a partitioned ephemeral memory region (110) as well as DRAM being implemented as a cache, an S3-like power state with relatively lower power may be realized.

In this example the SoC, rather than being placed in an ultra-low power state, the SoC may be completely powered off. Here, depending on resume speed and power consumption associated with completely powering off the SoC, it may be decided volatile areas remain powered or in different SoC power modes partially flushing Caches L1, L2, L3 ... and its registers. In this example, a user may decide between power consumed while in a sleep state and resume time. To shut down, the SoC may be completely flushed to NVM.

Similarly, in the example of the DRAM, rather than being placed in an ultra-low power state, may be completely powered off. In this example the DRAM may be flushed and shutdown or be kept in low-power mode depending on how the user has indicated via BIOS selections. Again, a user may decide between power consumed while sleeping and a bigger suspend and resume time if shutdown. To shut down, the DRAM is to be completely flushed.

As described herein, however, instead of the non-volatile memory device (105) being placed in a low-power state, it may now be possible to place the non-volatile memory device (105) in an off state. Because the ephemeral memory region (110) has an associated encryption key, any data on the ephemeral memory region (110) of the non-volatile memory device (105) may be accessed once power is restored to the non-volatile memory device (105). Table 1 describes additional power modes associated with certain hardware resources and correspondent actions associated with these resources under different power states.

**Table 1**

| S3 (NVM + DRAM as a Cache) | |
|---|---|
| With platform managing the keys, S3-like state with lower power may be realized | Correspondent Actions |
| | |
| SoC | Ultra Low-Power/Off^{∗∗∗} |
| DRAM | Low-power/ Off^{∗∗} |
| NVM | Off |
| Flush SoC volatile areas to Storage^{∗} or DRAM or NVM Volatile | Yes^{∗∗∗} |
| Flush DRAM to NVM | No/Yes (if DRAM Off)^{∗∗} |
| Copy NVM ephemeral to/from Storage^{∗} | No |
| | |
| Note: If the DRAM is flushed, then the platform consumes less power, but suspend and resume times may be longer | |
| ^{∗}Storage = NVM Persistent or SDD, HDD, etc. | |
| ^{∗∗} DRAM can be flushed and shutdown or be kept in low-power mode. A trade-off between power consumed while sleeping and a longer suspend and resume time if shutdown is realized. To shutdown, the DRAM may be completely flushed. | |
| ^{∗∗∗} Depending on resume speed and power consumption, a user may decide to keep ephemeral areas powered, or in different SoC power modes partially flushing Caches L1, L2, L3.. and its registers. A | |
| trade-off between power consumed while sleeping and resume time is realized. To shutdown, the SoC may be completely flushed. | |
| | |

| S3 (NVM + DRAM side-by-side) | |
|---|---|
| With platform managing the keys, an S3-like stale with lower power may be realized | Correspondent Action |
| | |
| SoC | Ultra Low-Power |
| DRAM | Low-power |
| NVM | Off |
| Flush SoC volatile areas to Storage* or DRAM or NVM Volatile | Yes*** |
| Copy DRAM to/from Storage* | No |
| Copy NVM ephemeral to/from Storage* | No |
| | |
| *Storage = NVM Persistent or SDD, HDD, etc. | |
| ***Depending on resume speed and power consumption caveats, a user may decide to keep volatile areas powered, or in different SoC power modes partially flushing Caches L1, L2, L3 ... and its registers. A trade-off between power consumed while sleeping and resume time is realized. To shutdown, the device may be completely flushed. | |
| | |

| S3 (NVM Only) | |
|---|---|
| With platform managing the keys, in an NVM-only platform, an S3-like state with ZERO or signifficant lower power may be realized | Correspondent Actions |
| | |
| SoC | Off^{∗∗∗} |
| NVM | Off |
| Flush SoC volatile areas to Storage^{∗} or NVM Volatile | Yes^{∗∗∗} |
| Copy NVM ephemeral to/from NVM or Storage^{∗} | No |
| | |
| ^{∗}Storage = NVM Persistent or SDD, HDD, etc. | |
| ^{∗∗∗}Depending on resume speed and power consumption, a user may decide to keep volatile areas powered, or in different SoC power modes partially flushing Caches L1, L2, L3 ... and its registers. A trade-off between power consumed while sleeping and resume time is realized. To shutdown, the device may be completely flushed. | |
| | |

| S4 (NVM Only or NVM + DRAM (Cache or Not) | |
|---|---|
| With platform managing the keys, a user may have an S4 state with faster suspend and resume times (almost instant in a platform with NVM only) | Correspondent Actions |
| | |
| SoC | Off |
| DRAM | Off |
| NVM | Off |
| Flush SoC volatile areas to Storage^{∗} or DRAM or NVM Volatile | Yes |
| Flush DRAM Cache to NVM or copy DRAM to/from or Storage^{∗} | Yes |
| Copy NVM ephemeral to/from NVM or Storage^{∗} | No |
| ^{∗}Storage = NVM Persistent or SDD, HDD, etc. | |
| ^{∗∗}Currently developed platforms implement hibernate when NVM is used as memory (Volatile). To implement that with current HW infrastructure, the NVM Volatile area may be flushed to NVM Storage area or Traditional Storage. Because the process of flushing/copying the ephemeral Area would be a heavy burden, it is reasonable to consider that Terabytes of data woud be moved in this process resulting in an impractical process. | |
| ^{∗∗∗}The presently described computing device (100) and methods of operation eliminates the need to flush ephemeral NVM, while keeping the process secure and user friendly. | |

The non-volatile memory device (105) may be any memory device that, even when power is removed from the device, data is maintained thereon.

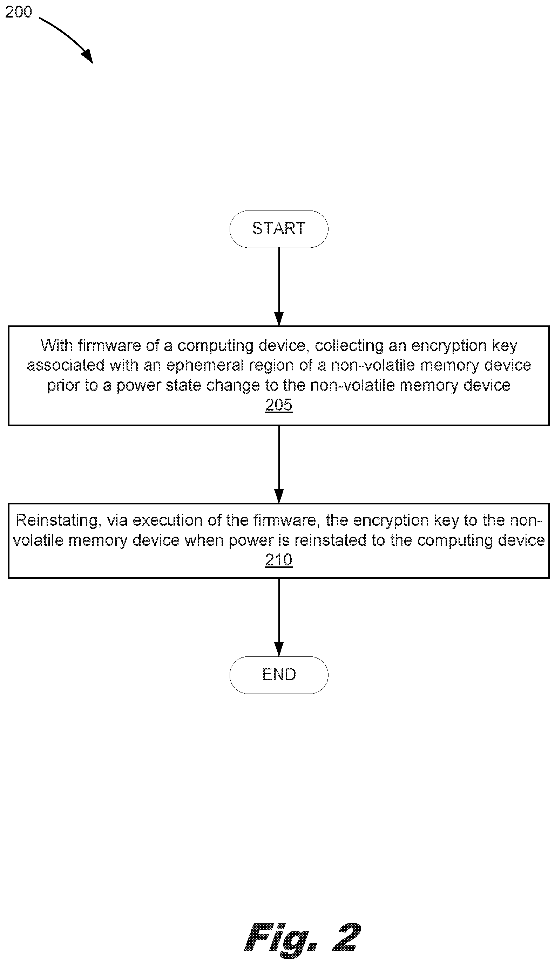

Fig. 2 is a flowchart depicting a method (200) of unlocking a data storage device of a computing device according to an example of the principles described herein. The method (200) may include, with firmware (115) of a computing device (100), collecting (205) an encryption key associated with an ephemeral memory region (110) of a non-volatile memory device (105) prior to a power state change to the non-volatile memory device (105). A power state change may be initiated by a user of the computing device (100). In any example, the firmware (115) may communicate with the operating system so as to prevent the power state change of the non-volatile memory device (105) and/or the computing device (100) until each encryption key associated with each ephemeral memory region (110) of each non-volatile memory device (105) is received.

The method (200) may continue with reinstating (210), via execution of the firmware (115), the encryption key to the non-volatile memory device (105) when power is reinstated to the computing device (100). As described herein, the power state change may be any of the sleep states (S1-S3) or hibernation (S4). In any of these examples, data stored on the ephemeral memory region (110) of the non-volatile memory device (105) may be retrieved using the encryption key in order to place the computing device (100) in a state prior to the power state change.

In an example, the firmware (115) collection (205) process may prevent the operating system of the computing device (100) from changing the power state. This may be done so as to prevent the loss of any of the encryption keys and the securing of those keys in persistent memory within any memory device of the computing device (100).

In any example presented herein, the non-volatile memory device (105) may include computer-readable program code that, when executed by a processor of the computing device (100) creates the encryption key. In any example presented herein, the non-volatile memory device (105) may be associated with an application specific integrated circuit (ASIC) that provides an encryption key to be associated with the ephemeral memory region (110) of the non-volatile memory device (105).

In any example presented herein, the BIOS of the computing device (100) may include a number of user options to determine under what conditions and if the encryption keys are to be sent to the non-volatile memory device (105) upon reinstating (210) of the encryption key to the non-volatile memory device (105). In an example, the user, via a graphical user interface, may select an option to prevent the encryption keys from ever being provided to the non-volatile memory device (105). Alternatively, the user may be provided with the option to have the encryption keys automatically be provided to the non-volatile memory device (105) without any security or password input from an operator of the computing device (100). In an alternative example, the user may be provided with the option for the BIOS to request a password or other type of authentication to the computing device (100) as a condition of and prior to the encryption key being provided to the non-volatile memory device (105).

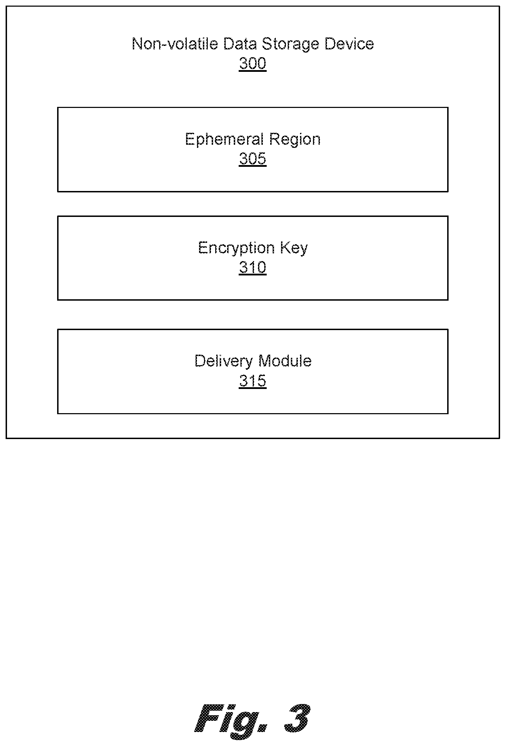

Fig. 3 is a block diagram of a non-volatile data storage device (300) according to an example of the principles described herein. In this example, the non-volatile data storage device (300) may include an ephemeral region (305) that stores volatile data such that when power is removed therefrom, the data is inaccessible without an encryption key (310). In an example, the ephemeral region (305) of the non-volatile data storage device (300) may be partitioned such that the partition maintains system data files, application data files, and/or operating system (OS) data files used during a power cycle to reinstate a state in which a computing device was in prior to the power cycle.

The encryption key (310) may be any type of key that may be associated with the ephemeral region (305) of the non-volatile data storage device (300). The encryption key (310) may be created using any type of encryption method and/or device associated with the non-volatile data storage device (300). In an example, the non-volatile data storage device (300) may be self-encrypting such that an encryption key is created after the data has been written to and encrypted on the ephemeral region (305). In an example, the encryption of the data on the ephemeral region (305) may be performed by a device within a computing system associated with the non-volatile data storage device (300). In either of these examples, firmware within the computing device may request that the encryption key be delivered to the firmware for storage prior to a power cycle being conducted (S1-S4 or power off).

In order to provide the encryption key to the firmware of the computing device, the non-volatile data storage device (300) may include a delivery module (315). The delivery module may be any computer readable program code and/or device that sends the encryption key to the firmware. The delivery module (315) may deliver the encryption key to the firmware upon creation of the encryption key. As a consequence, once data is written to the ephemeral region (305) of the non-volatile data storage device (300), a generated encryption key is made available to the firmware in case power is accidentally cut from the non-volatile data storage device (300) and its ephemeral region (305). Thus, in cases of unexpected power loses, the data maintained in the ephemeral region (305) may still be made accessible once the computing device and the non-volatile data storage device (300) is powered up again. By doing so, the non-volatile data storage device (300) prevents permanent loss of data on the ephemeral region (305) regardless of when the power loss was experienced by the non-volatile data storage device (300).

The non-volatile data storage device (300) may be implemented in a computing device. Examples of computing devices include servers, desktop computers, laptop computers, personal digital assistants (PDAs), mobile devices, smartphones, gaming systems, and tablets, among other types of computing devices.

The non-volatile data storage device (300) may be utilized in any data processing scenario including, stand-alone hardware, mobile applications, through a computing network, or combinations thereof. Further, the non-volatile data storage device (300) may be used in a computing network, a public cloud network, a private cloud network, a hybrid cloud network, other forms of networks, or combinations thereof. In one example, the methods provided by the non-volatile data storage device (300) are provided as a service over a network by, for example, a third party.

The system, method and non-volatile data storage device described herein provides for the use of firmware within a computing device to manage the encryption keys of NVM devices to recover from power loss and transparently unlock persistent memory devices that hold data during a suspend and resume process of a computing device. This allows the computing device to resume from low power- or indeed zero power- much faster than what could have been achieved without the encryption keys. The computing system includes any type of data storage devices including DRAM, persistent memory devices such as NVDIMMs, memory chips, embedded memory, among others (implemented using PCRAM, Memristor, STTRAM, etc.) as well as other data storage devices such as hard disk drives (HDDs), solid state drives (SSDs), SD cards, etc. With these memory devices, some or all of them may include an ephemeral data partition where application data, operating system (OS) data, or any other type of data that may be maintained for relatively quick access by the processor is maintained. By sending the encryption key associated with these ephemeral partitions to the firmware of the computing device for safe access by the BIOS upon reboot of the computing device, the process of changing power states may not include a process of copying data from these ephemeral portions into NVM devices. This may save time in switching from one power state to another as well as save data storage space within any of the herein-described NVM devices. Even further, energy may be conserved due to the processor not copying these filed from the ephemeral partition to the NVM device. Further, the present methods and systems eliminate the steps used to flush the ephemeral regions of the non-volatile data storage device while concurrently securing the data maintained on those regions. Still further, the system may be relatively more user friendly by allowing a user to quickly move from one power state to another while maintaining a state of the computing device through the changes in the power state. Even further, because most mobile devices implement the power states of S1-S3 and not S4, the present method may be used on those devices in order to enable additional states such as the hybrid S3 state and/or S4 state.

Aspects of the present system and method are described herein with reference to flowchart illustrations and/or block diagrams of methods, apparatus (systems) and computer program products according to examples of the principles described herein. Each block of the flowchart illustrations and block diagrams, and combinations of blocks in the flowchart illustrations and block diagrams, may be implemented by computer usable program code. The computer usable program code may be provided to a processor of a general-purpose computer, special purpose computer, or other programmable data processing apparatus to produce a machine, such that the computer usable program code, when executed via, for example, a processor of the computing device (100) or other programmable data processing apparatus, implement the functions or acts specified in the flowchart and/or block diagram block or blocks. In one example, the computer usable program code may be embodied within a computer readable storage medium; the computer readable storage medium being part of the computer program product. In one example, the computer readable storage medium is a non-transitory computer readable medium.

The preceding description has been presented to illustrate and describe examples of the principles described. This description is not intended to be exhaustive or to limit these principles to any precise form disclosed. Many modifications and variations are possible in light of the above teaching.

## Claims

1. A computing device (100), comprising:
a non-volatile memory device (105) comprising an ephemeral memory region (110) therein, the ephemeral memory region (110) being encrypted and the ephemeral memory region comprising an associated encryption key; and
firmware (115) to cause the encryption key to be stored in a persistent memory prior to any power loss to the computing device.

2. The computing device (100) of claim 1, wherein an operating system of the computing device is prevented from initiating data via a basic input/output system (BIOS) and present on the ephemeral memory region.

3. The computing device (100) of claim 1, wherein the encryption key is stored on a platform firmware storage device.

4. The computing device (100) of claim 1, wherein the encryption key is stored on non-volatile memory of a hardware-trusted platform module, TPM.

5. The computing device (100) of claim 4, wherein the hardware-trusted platform module, TPM, generates the encryption key to be stored on the non-volatile memory of the trusted platform module, TPM.

6. The computing device (100) of claim 1, wherein storage of the encryption key is maintained, by delivery of the encryption key to firmware (115) upon power restoration to the computing device (100).

7. The computing device (100) of claim 6, wherein delivery of the encryption key is completed upon receipt of a password.

8. The computing device of claim 1, wherein a non-volatile memory of the firmware (115) receives the encryption key directly after it has been created.

9. A method (200) of unlocking data storage devices of a computing device, comprising:
with firmware (115) of a computing device (100), collecting (205) from a non-volatile memory device (105) an encryption key associated with an ephemeral region (110) of the non-volatile memory device prior to a power state change to the non-volatile memory device (105); and
reinstating (210), via execution of the firmware (115), the encryption key to the non-volatile memory device (105) when power is reinstated to the computing device (100).

10. The method (200) of claim 9, wherein a previously saved state of data in the ephemeral region (110) is initialized upon reinstating the encryption key.

11. The method (200) of claim 9, wherein collecting (205) an encryption key associated with the ephemeral region (110) of a non-volatile memory device (105) prior to a power loss to the non-volatile memory device (105) comprises receiving the encryption key at a platform firmware storage device.

12. The method (200) of claim 9, wherein reinstating (210), via execution of the firmware (115), the encryption key to the non-volatile memory device (105) comprises presenting a request to reinstate the encryption key.

13. A non-volatile data storage device (300), comprising:
an ephemeral region (305);
an encryption key (310) used to encrypt the ephemeral region (305); and
a delivery module (315) to, upon creation of the encryption key (310), deliver the encryption key (310) to firmware of a computing device thereby to deliver the encryption key to firmware prior to power loss at the ephemeral region.

14. The non-volatile data storage device (300) of claim 13, wherein, subsequent to power restoration to the non-volatile memory device (300) after power loss at the ephemeral region (305), the non-volatile memory device (300) receives the encryption key (310) from the firmware.

15. The non-volatile data storage device (300) of claim 14, wherein a previously saved state of data in the ephemeral region (305) is initialized subsequent to power restoration to the non-volatile memory device (300) and receipt of the encryption key (310).

## Patentansprüche

1. Rechenvorrichtung (100), die Folgendes umfasst:
eine nicht flüchtige Speicherungsvorrichtung (105), die einen vorübergehenden Speicherungsbereich (110) darin umfasst, wobei der vorübergehende Speicherungsbereich (110) verschlüsselt ist und der vorübergehende Speicherungsbereich einen zugehörigen Verschlüsselungsschlüssel umfasst; und
Firmware (115), die dazu dient, den Verschlüsselungsschlüssel zu veranlassen, in einer dauerhaften Speicherung vor einem beliebigen Leistungsverlust an die Rechenvorrichtung gespeichert zu werden.

2. Rechenvorrichtung (100) nach Anspruch 1, wobei ein Betriebssystem der Rechenvorrichtung daran gehindert wird, Daten über ein Eingabe-/Ausgabe-Grundsystem (Basic Input/Output System - BIOS) einzuleiten und auf dem vorübergehenden Speicherungsbereich vorhanden ist.

3. Rechenvorrichtung (100) nach Anspruch 1, wobei der Verschlüsselungsschlüssel auf einer Plattform-Firmware-Speichervorrichtung gespeichert ist.

4. Rechenvorrichtung (100) nach Anspruch 1, wobei der Verschlüsselungsschlüssel auf einer nicht flüchtigen Speicherung eines Hardwarevertrauenswürdigen Plattformmoduls, Trusted Platform Module - TPM, gespeichert ist.

5. Rechenvorrichtung (100) nach Anspruch 4, wobei das Hardwarevertrauenswürdige Plattformmodul, TPM, den Verschlüsselungsschlüssel erzeugt, der dazu dient, auf der nicht flüchtigen Speicherung des vertrauenswürdigen Plattformmoduls, TPM, gespeichert zu werden.

6. Rechenvorrichtung (100) nach Anspruch 1, wobei der Speicher des Verschlüsselungsschlüssels durch eine Lieferung des Verschlüsselungsschlüssels an eine Firmware (115) bei einer Leistungsrücksicherung an die Rechenvorrichtung (100) aufrechterhalten wird.

7. Rechenvorrichtung (100) nach Anspruch 6, wobei eine Lieferung des Verschlüsselungsschlüssels bei einem Empfang eines Passworts abgeschlossen ist.

8. Rechenvorrichtung nach Anspruch 1, wobei eine nicht flüchtige Speicherung der Firmware (115) den Verschlüsselungsschlüssel direkt nach einem Erstellen empfängt.

9. Verfahren (200) zum Entsperren von Datenspeichervorrichtungen einer Rechenvorrichtung, die Folgendes umfasst:
mit einer Firmware (115) einer Rechenvorrichtung (100), Sammeln (205) eines Verschlüsselungsschlüssels, der einem vorübergehenden Bereich (110) der nicht flüchtigen Speicherungsvorrichtung zugeordnet ist, vor einer Leistungszustandsänderung von einer nicht flüchtigen Speicherungsvorrichtung (105) in die nicht flüchtige Speicherungsvorrichtung (105); und
Wiederherstellen (210), über eine Ausführung der Firmware (115), des Verschlüsselungsschlüssels an die nicht flüchtige Speicherungsvorrichtung (105), wenn Leistung an die Rechenvorrichtung (100) wiederhergestellt wird.

10. Verfahren (200) nach Anspruch 9, wobei ein zuvor gespeicherter Zustand von Daten in dem vorübergehenden Bereich (110) bei einem Wiederherstellen des Verschlüsselungsschlüssels eingeleitet wird.

11. Verfahren (200) nach Anspruch 9, wobei ein Sammeln (205) eines Verschlüsselungsschlüssels, der dem vorübergehenden Bereich (110) einer nicht flüchtigen Speicherungsvorrichtung (105) vor einem Leistungsverlust an der nicht flüchtigen Speicherungsvorrichtung (105) zugeordnet ist, ein Empfangen des Verschlüsselungsschlüssels an einer Plattform-Firmware-Speichervorrichtung umfasst.

12. Verfahren (200) nach Anspruch 9, wobei ein Wiederherstellen (210), über eine Ausführung der Firmware (115), des Verschlüsselungsschlüssels an die nicht flüchtige Speicherungsvorrichtung (105) ein Darstellen einer Anforderung zum Wiederherstellen des Verschlüsselungsschlüssels umfasst.

13. Nicht flüchtige Datenspeichervorrichtung (300), die Folgendes umfasst:
einen vorübergehenden Bereich (305);
einen Verschlüsselungsschlüssel (310), der verwendet wird, um den vorübergehenden Bereich (305) zu verschlüsseln;
und ein Lieferungsmodul (315), um, bei einer Erstellung des Verschlüsselungsschlüssels (310), den Verschlüsselungsschlüssel (310) an eine Firmware einer Rechenvorrichtung zu liefern, wodurch der Verschlüsselungsschlüssel vor einem Leistungsverlust an dem vorübergehenden Bereich an eine Firmware geliefert wird.

14. Nicht flüchtige Datenspeichervorrichtung (300) nach Anspruch 13, wobei nach einer Leistungsrücksicherung zu der nicht flüchtigen Speicherungsvorrichtung (300) nach einem Leistungsverlust an dem vorübergehenden Bereich (305), die nicht flüchtige Speicherungsvorrichtung (300) den Verschlüsselungsschlüssel (310) von der Firmware empfängt.

15. Nicht flüchtige Datenspeichervorrichtung (300) nach Anspruch 14, wobei ein zuvor gespeicherter Zustand von Daten in dem vorübergehenden Bereich (305) nach einer Leistungsrücksicherung zu der nicht flüchtigen Speicherungsvorrichtung (300) und einem Empfang des Verschlüsselungsschlüssels (310) eingeleitet wird.

## Revendications

1. Dispositif informatique (100) comprenant :
un dispositif de mémoire non volatile (105) comprenant une région de mémoire éphémère (110) à l'intérieur de celui-ci, la région de mémoire éphémère (110) étant chiffrée et la région de mémoire éphémère comprenant une clé de chiffrement associée ; et
un micrologiciel (115) pour amener la clé de chiffrement à être stockée dans une mémoire persistante avant toute perte de puissance du dispositif informatique.

2. Dispositif informatique (100) selon la revendication 1, dans lequel un système d'exploitation du dispositif informatique est empêché de déclencher des données par l'intermédiaire d'un système d'entrée/sortie de base (BIOS) et présent sur la région de mémoire éphémère.

3. Dispositif informatique (100) selon la revendication 1, dans lequel la clé de chiffrement est stockée sur un dispositif de stockage de micrologiciel de plateforme.

4. Dispositif informatique (100) selon la revendication 1, dans lequel la clé de chiffrement est stockée sur une mémoire non volatile d'un module de plateforme de confiance matérielle, TPM.

5. Dispositif informatique (100) selon la revendication 4, dans lequel le module de plateforme de confiance matérielle, TPM, génère la clé de chiffrement à stocker sur la mémoire non volatile du module de plateforme de confiance, TPM.

6. Dispositif informatique (100) selon la revendication 1, dans lequel le stockage de la clé de chiffrement est maintenu, par livraison de la clé de chiffrement au micrologiciel (115) lors de la restauration de puissance au dispositif informatique (100).

7. Dispositif informatique (100) selon la revendication 6, dans lequel la livraison de la clé de chiffrement est achevée lors de la réception d'un mot de passe.

8. Dispositif informatique selon la revendication 1, dans lequel une mémoire non volatile du micrologiciel (115) reçoit la clé de chiffrement directement après sa création.

9. Procédé (200) de déverrouillage de dispositifs de stockage de données d'un dispositif informatique, comprenant :
avec un micrologiciel (115) d'un dispositif informatique (100), la collecte (205) à partir d'un dispositif de mémoire non volatile (105) d'une clé de chiffrement associée à une région éphémère (110) du dispositif de mémoire non volatile avant un changement d'un état de puissance au dispositif de mémoire non volatile (105) ; et
la réintégration (210), par l'intermédiaire d'une exécution du micrologiciel (115), de la clé de chiffrement dans le dispositif de mémoire non volatile (105) lors de la restauration de puissance du dispositif informatique (100).

10. Procédé (200) selon la revendication 9, dans lequel un état de données précédemment enregistré dans la région éphémère (110) est initialisé lors de la réintégration de la clé de chiffrement.

11. Procédé (200) selon la revendication 9, dans lequel la collecte (205) d'une clé de chiffrement associée à la région éphémère (110) d'un dispositif de mémoire non volatile (105) avant une perte de puissance du dispositif de mémoire non volatile (105) comprend la réception de la clé de chiffrement au niveau d'un dispositif de stockage de micrologiciel de plateforme.

12. Procédé (200) selon la revendication 9, dans lequel la réintégration (210), par l'intermédiaire d'une exécution du micrologiciel (115), de la clé de chiffrement dans le dispositif de mémoire non volatile (105) comprend la présentation d'une demande de réintégration de la clé de chiffrement.

13. Dispositif de stockage de données non volatiles (300), comprenant :
une région éphémère (305) ;
une clé de chiffrement (310) utilisée pour chiffrer la région éphémère (305) ;
et un module de livraison (315) pour, lors de la création de la clé de chiffrement (310), délivrer la clé de chiffrement (310) à un micrologiciel d'un dispositif informatique pour fournir de ce fait la clé de chiffrement à un micrologiciel avant la perte de puissance au niveau de la région éphémère.

14. Dispositif de stockage de données non volatiles (300) selon la revendication 13, dans lequel, suite à la restauration de puissance du dispositif de mémoire non volatile (300) après la perte de puissance au niveau de la région éphémère (305), le dispositif de mémoire non volatile (300) reçoit la clé de chiffrement (310) à partir du micrologiciel.

15. Dispositif de stockage de données non volatiles (300) selon la revendication 14, dans lequel un état de données précédemment enregistré dans la région éphémère (305) est initialisé suite à une restauration de puissance du dispositif de mémoire non volatile (300) et à la réception de la clé de chiffrement (310).
